(19) Europäisches Patentamt
European Patent Office
Office européen des brevets

(11) **EP 1 841 133 A1**

(12) **EUROPEAN PATENT APPLICATION**

(43) Date of publication:
**03.10.2007 Bulletin 2007/40**

(51) Int Cl.:
***H04L 12/24*** *(2006.01)*

(21) Application number: **06290546.8**

(22) Date of filing: **29.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alcatel Lucent**
**75008 Paris (FR)**

(72) Inventors:
• **Donadio, Pasquale**
**80129 Napoli (IT)**

• **Paparella, Andrea**
**21052 Busto Arsizio (Varese) (IT)**
• **Riglietti, Roberto**
**20059 Vimercate (Milano) (IT)**

(74) Representative: **Menzietti, Domenico et al**
**Alcatel Lucent**
**Intellectual Property & Standards**
**70430 Stuttgart (DE)**

(54) **Transmission of management information via executable encoded message**

(57)  Described is a method of transmitting management information in a telecommunication network from a first network apparatus to a second network apparatus of the telecommunication network, the method comprising: generating, at the first network apparatus an encoded management message comprising at least one executable instruction, wherein the at least one executable instruction results in the management information when executed: transmitting the encoded management message from the first network apparatus to the second network apparatus; recovering the management information, at the second network apparatus, by executing the at least one executable instruction comprised in the encoded management message. The method allows to reduce the amount of information exchanged.

Figure 1b

Printed by Jouve, 75001 PARIS (FR)

**Description**

The present invention generally relates to the field of telecommunication networks. In particular, the present invention relates to a method for transmitting management information in a telecommunication network, to a network element and to an element management server for implementing such a method.

It is known in the art that managing a telecommunication network may be performed by a Telecommunication Management Network (TMN). A TMN network has an hierarchical structure of layers, each layer being responsible for performing a predetermined set of management tasks. Communication between different layers of the TMN hierarchy is based upon a set of rules, which is termed management protocol.

In particular, the lower layer of the TMN hierarchy, which is termed Element Management Layer (EML), is responsible for managing each network element from the primary equipment point of view. Examples of tasks performed by the EML layer are:

- configuration of boards, termination points, connections between resources;
- error detection;
- power consumption estimation;
- network element temperature estimation;
- employed resources estimation (e.g., CPU usage percentage, buffer available space, queue length, ...);
- registration of statistical parameters;
- software upgrade; and
- collection of performance measurements.

For each network element, such tasks are performed by a network apparatus which is termed element management server (EMS). More particularly, an element management server is provided with a module which is termed "manager", and which is adapted to communicate with a corresponding module placed into the network element to be managed, which is termed "agent".

Each network element comprises a local database, which stores a plurality of instances, each instance corresponding to a respective network element resource. For each instance, the local database further stores a respective set of attributes, defining features and status of the corresponding resource. Each attribute has a given value, which is also stored in the local database. For instance, in case of a board, the attributes may be the board type, the alarms the board can issue, the board part-number or the like.

The above described principles of network management through a TMN network may apply both to circuit switched telecommunication networks (such as SDH or Sonet) and to packet switched telecommunication networks (such as Ethernet, IP, ATM or the like). However, different types of telecommunication networks may require both different types of management protocols and different types of local databases.

For example, in SDH networks, the local database is Q3-based object oriented, and the management protocol is CMIP/CMISE. In ATM and Ethernet networks, the local database is SNMP-based object oriented (also called MIB, "Management Information Base"), and the management protocol is SNMP. In Sonet networks, the local database is TL1 command-based, and the management protocol is TPTAPS.

Typically, executing management tasks by an element management server requires exchanging information between manager and server. In the following description and in the claims, the term "management message" will refer to a set of management information issued either by the manager or by the agent, which is formatted according to the management protocol supported by manager and agent, which allows the element management server to perform a given management task upon a network element.

Typically, a management protocol provides a predetermined set of management messages, each management message being adapted to perform a given task, such as allowing the element management server to know the values of a given set of attributes of a given instance, allowing the element management server to force a given set of attributes of a given instance to respective predetermined values, or the like.

A management message typically comprises a header, in turn comprising a plurality of header fields having a predetermined size. The header fields specify the management protocol type, the management protocol version, the management message type, and other information, which are not further described, since they are not relevant to the present description.

A management message further comprises a payload, which comprises a plurality of payload fields, also having predetermined size. Each payload field may comprise either an object identifier or a value.

An object identifier substantially corresponds to a so-called "registration number", i.e. to a number univocally identifying, within a given management protocol, an attribute of a given instance, as it will be described in further details herein after.

It is known in the art that in circuit switched telecommunication networks, management messages exchanged between manager and agent are transmitted upon dedicated channels, having a fixed bandwidth. On the other hand, in packet switched telecommunication network, management messages are carried by user packets, i.e. by packets which are usually employed for carrying user traffic.

Such management messages are continuously increasing in size, since network elements are continuously increasing in complexity (i.e. they comprise an increasing number of resources, such as ports, interfaces, or the like). Therefore, transmitting such management messages requires an increasing bandwidth.

In circuit switched networks, this disadvantageously implies that transmission of management messages requires a high amount of time, the fixed bandwidth of the dedicated channel being insufficient in comparison with the management message size.

On the other hand, in packet switched networks, the increasing size of management messages disadvantageously implies a growth of the number of user packets required for transporting management messages, thus subtracting available bandwidth to user traffic.

The above mentioned drawbacks are made even more severe, due to the fact that an element management server typically has to perform a high number of management tasks, and some of these management tasks have to be frequently performed, for instance at least once a day.

Therefore, the general object of the present invention is providing a method of transmitting management information in a telecommunication network which overcomes the aforesaid problems.

In particular, an object of the present invention is providing a method for transmitting management information in a telecommunication network which advantageously allows to reduce the amount of information exchanged between manager and agent, both reducing the management message size, and reducing the number of management messages required for performing a given task.

This and other objects are achieved, according to the present invention, by a method for transmitting management information according to claim 1, a network element according to claim 8, a network apparatus according to claim 15 and a network according to claim 16.

According to a first aspect, the present invention provides a method of transmitting management information in a telecommunication network from a first network apparatus to a second network apparatus of said telecommunication network, the method comprising: generating, at said first network apparatus, an encoded management message comprising at least one executable instruction, wherein said executable instruction results in said management information when executed; transmitting said encoded management message from said first network apparatus to said second network apparatus; recovering said management information, at said second network apparatus, by executing said at least one executable instruction comprised in said encoded management message. Generating may comprise providing an encoded management message whose payload comprises a sequence of executable instructions that, when executed, allow to reconstruct a content of payload fields of a management message containing said management information.

According to a second aspect, the present invention provides a network apparatus of a telecommunication network which is adapted to transmit management information to a further network apparatus of said telecommunication network, wherein said network apparatus comprises: an encoder module for generating an encoded management message. The encoded management message comprises at least one executable instruction, wherein said at least one executable instruction results in said management information when executed; and a transmitter for transmitting said encoded management message to said further network apparatus.

The management information may comprise at least an object identifier or at least a value. An object identifier may indicate a resource of said second network apparatus. A value may be a value of said object identifier.

The management information may be comprised into at least a management message payload.

The at least one executable instruction may comprise at least an indexed loop.

The first and second network apparatus comprise at least a common dictionary.

According to a third aspect, the present invention provides a network apparatus of a telecommunication network which is adapted to receive management information from a further network apparatus of said telecommunication network. The network apparatus comprises: a receiver for receiving an encoded management message from said further network apparatus, wherein said encoded management message comprises at least one executable instruction, wherein said at least one executable instruction results in said management information when executed; and a decoder module for recovering said management information by executing said at least one executable instruction comprised in said encoded management message.

According to a fourth aspect, the present invention provides a network comprising at least two of the above network apparatus.

The invention will become clear by the following detailed description, given by way of example and not of limitation, to be read with reference to the accompanying drawings, wherein:

- Figure 1 a schematically shows an element management server and a network element according to the prior art;
- Figure 1b schematically shows an element management server and a network element according to an embodiment of the present invention;

- Figure 2 schematically shows a first example of encoding an SNMP-based management message according to the present invention;
- Figure 3 schematically shows a second example of encoding SNMP-based management messages according to the present invention; and
- Figure 4 schematically shows a third example of encoding SNMP-based management messages according to the present invention.

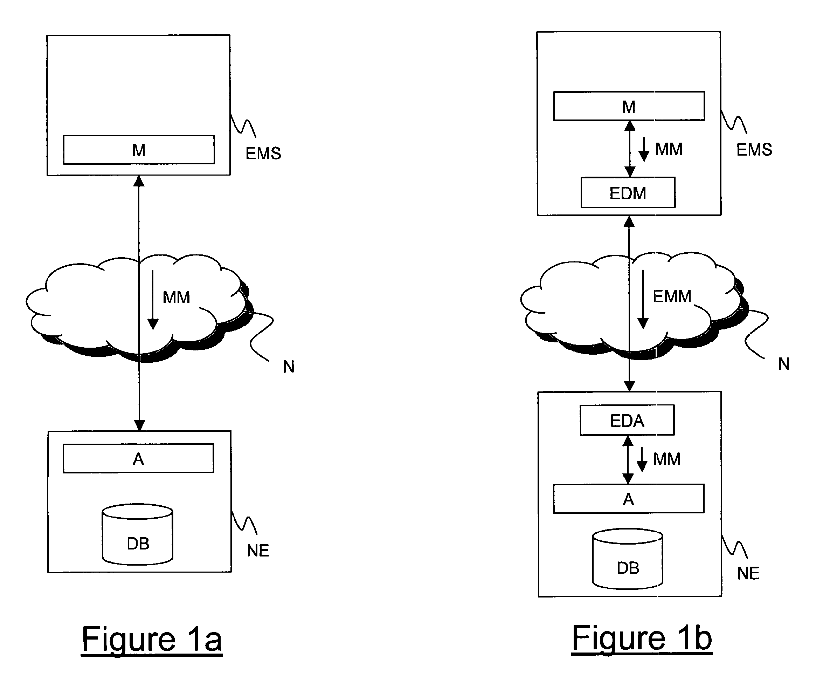

Figures 1a and 1b schematically show an element management server and a network element according to the prior art and according to an embodiment of the present invention, respectively.

Both Figures show an element management server EMS connected to a network element NE to be managed. The server EMS and the network element NE may be either installed in a same network apparatus, or they may be separated. Herein, it is assumed that the server EMS and the network element NE are separated, so that they communicate through a telecommunication network N. Communication is performed either through dedicated channels in case N is a circuit switched network, or through user packets in case N is a packet switched network.

The server EMS is connected to further network management apparatuses, which are adapted to perform management tasks of other layers of the above cited TMN hierarchy, and which are not shown in Figures 1a, 1 b, since they are not relevant to the present description.

The network element NE comprises a local database DB which, as already mentioned, stores a plurality of instances, each instance being associated to a respective resource of the network element NE. The local database DB further stores, for each instance, a respective set of attributes and the values of such attributes.

According to the prior art, as shown in Figure 1 a, the server EMS is provided with a manager M, which is adapted to communicate with an agent A located within the network element NE. As already mentioned, the manager M and the agent A communicate by exchanging management messages, which are formatted according to the management protocol supported by the network N.

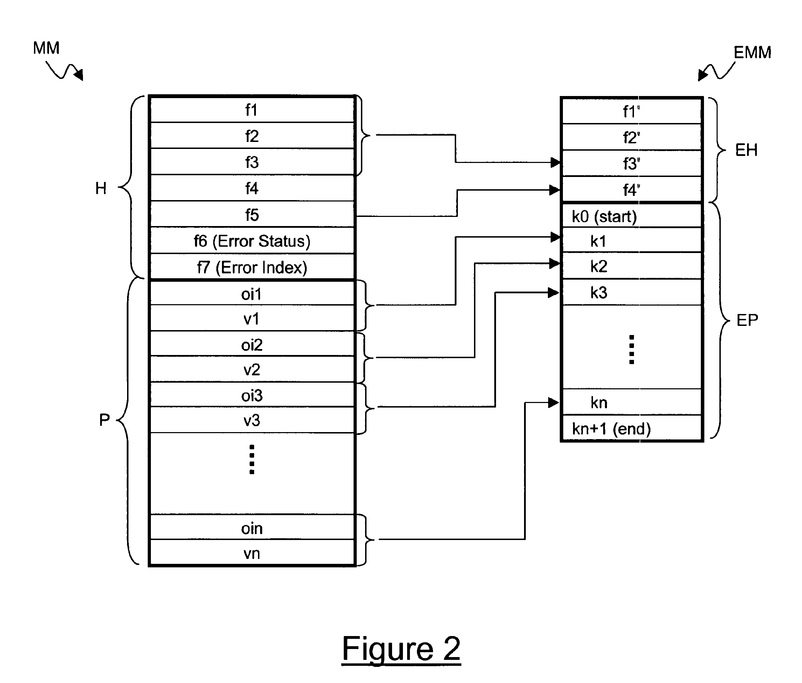

By way of example, Figure 1a shows a management message MM, which is sent by the manager M of the server EMS to the agent A of the network element NE through the telecommunication network N. Herein after, different examples of management messages MM will be described in further detail, by referring to Figures 2, 3 and 4.

An object of the present invention, as already mentioned, is providing a method of transmitting management information which allows to reduce the amount of management information exchanged between manager M and agent A by reducing size and/or number of the management messages transporting such management information.

For this purpose, as shown in Figure 1b, according to the present invention, the server EMS is provided with a manager-side encoding/decoding module EDM, while the network element NE is provided with an agent-side encoding/decoding module EDA. The module EDM may be at least partially integrated with the manager M. Similarly, the module EDA may be at least partially integrated with the agent A. Both modules EDA and EDM may be either hardware implemented (for instance through ASIC or FPGA) o software implemented (for instance, firmware).

According to the present invention, when the manager M wishes to transmit a management message MM to the agent A, the management message MM is firstly encoded by the module EDM into an encoded management message EMM, which is transmitted through the telecommunication network N. Upon reception of the encoded management message EMM, the module EDA of the network element NE decodes it, thus recovering the original management message MM, which is then forwarded to the agent A for further processing.

Similarly, according to the present invention, a management message generated by the agent A is firstly encoded by the module EDA, then it is transmitted through the network N, and then it is decoded by the module EDM, which then forwards it to the manager M.

In particular, according to the present invention, encoding a management message comprises providing an encoded management message whose payload comprises a sequence of executable instructions. In the following description and in the claims, the expression "executable instruction" will indicate an instruction written in a given programming language that, when executed upon decoding, allows to reconstruct the content of at least a payload field of the original management message.

In other words, while, according to the prior art, element management server and network element exchange management messages whose payload fields comprise "static" data (such as object identifiers and values), according to the present invention, element management server and network element exchange encoded management messages whose payload fields comprise executable instructions, i.e. rules for determining such "static" data.

Indeed, the Applicant has noticed that such "static" data comprised a known management message payload are typically at least partially redundant. Therefore, the Applicant has noticed that executable instructions can be determined for reconstructing such "static" data, and that such executable instructions can be very compact in size, thanks to "static" data redundancy. Compression rates higher than 90% can be reached according to the present invention, as it will be shown in greater detail herein after.

Using encoded management messages comprising executable instructions according to the present invention also allows to reduce the number of exchanged management messages, as it will be shown in greater detail herein after.

By referring to Figure 2, a first example of encoding a management message according to the present invention will be described.

In this example, it is assumed that the server EMS requests to the network element NE the values of a given set of attributes of a given instance, which are stored in the local database DB of the network element NE. It is assumed that the manager M and the agent A support the SNMP management protocol. According to the SNMP, such a request is performed by sending a so-called GET-REQUEST message to the agent A.

Of course, SNMP is a non limiting example, and the following description could also apply to any other management protocol.

By referring to Figure 2, the management message MM comprises a header H and a payload P. The header H comprises different header fields f1, ..., f7, preferably with predefined sizes. The contents of the header fields are the following:

- field f1 (size=3 bytes): it specifies the management protocol type (SNMP, in this example);
- field f2 (size=3 bytes): it specifies the management protocol version;
- field f3 (size=variable number of bytes): it is associated to SNMP Community;
- field f4 (size=3 bytes): it specifies the operation type; for example, for SNMP, field f3 could be GET, SET, GETNEXT, ...;
- field f5 (size=4 bytes): it comprises the request identifier, which is typically an alphanumeric string;
- field f6 (size=3 bytes): it comprises information for recognising possible errors. In request messages, it comprises a predefined value (typically 0), while in response messages it comprises information about possible errors occurring at the network element (noError, tooBig, noSuchName, badValue, readOnly, genErr, or the like);
- field f7 (size=3 bytes): it specifies the error index, i.e. the index of the first variable causing the error. Again, in case of request messages, it assumes a predefined value (typically 0).

The payload P of the GET-REQUEST management message MM of Figure 2 comprises a plurality of payload fields. As already mentioned, each payload field comprises either an object identifier or a value. In particular, as shown in Figure 2, a first payload field oi1 comprises a first object identifier, and a second payload field v1 comprises a value of such a first object. Further, a third payload field oi2 comprises a second object identifier, and a fourth payload field v2 comprises a value of such a second object. And so on, until a $2n^{th}$ payload field oin comprising an $n^{th}$ object identifier, and a $(2n+1)^{th}$ payload field vn comprising a value of such an $n^{th}$ object.

The payload fields oi1, oi, ... oin have a fixed size, which is for instance 21 bytes in case of SNMP protocol. Similarly, the payload fields v1, v2, ..., vn have a fixed size, which is for instance 2 bytes in case of SNMP protocol.

Therefore, under the assumption that the GET-REQUEST management message MM of Figure 2 requests the values of nine different attributes of a certain resource of the network element NE, the management message MM overall size is the sum of the header size and payload size, i.e.

$$(3+3+8+3+4+3+3) + (9x(21+2)) = 27 + 207 = 234 \text{ bytes.}$$

Figure 2 shows an encoded management message EMM as issued by the module EDM after coding the above GET-REQUEST management message MM received from the manager M, according to a first embodiment of the present invention.

The encoded management message EMM comprises an encoded header EH and an encoded payload EP.

The encoded header EH comprises a first field f1', which identifies such a message EMM as an encoded message. Therefore, upon reception of the encoded message EMM by the network element NE, the network element NE is capable of recognising such a message EMM as an encoded message, and then to decode it through the module EDA before processing it through the agent A. For instance, such a field f1' could have a 1 byte size.

Optionally, the encoded header EH may also comprise a field f2', specifying the encoding version. For instance, such a field f2' could have a 1 byte size.

The encoded header EH further comprises a third field f3'. According to the present invention, the header fields f1, f2, f3 of the header H are mapped in such a third field f3'. Therefore, the third field f3' comprises information about the management protocol (SNMP in this example), its version, and the operation type. Preferably, for reaching higher compression ratios, the field f3' size is smaller than the sum of the respective sizes of the fields f1, f2, f3 of the header H. For instance, the field f3' size could be equal to 3 bytes.

Moreover, the encoded header EH comprises a field f4', which comprises the request identifier which was originally comprised into the header field f5. Preferably, the field f4' size is equal to the field f5 size, since the request identifier can not be compressed, for preserving compatibility with other managers which do not use the encoding method according to the present invention. Therefore, in this example, the field f4' may have a 4 byte size.

As already mentioned, the encoded payload EP, according to the present invention, comprises a sequence of executable instructions that, when executed upon decoding, allow to recover the payload P of the original management message MM. More particularly, according to the present invention, the encoded payload EP comprises a plurality of fields k0, k1, ... kn+1, each field comprising a respective executable instruction for recovering the content of at least a payload field of the original management message MM.

By way of example, if the first attribute of which the server EMS wishes to know the value is the attribute InterfaceCDElapsedTime of a given interface, the payload field oi1 of the management message MM comprises the registration number of such an attribute within the SNMP protocol, which could be for instance:

1.3.6.1.4.1.637.54.1.2.4.1.1.1.3.2.1,

wherein the last two digits (2.1) identify the instance to the given interface. The payload field v1 of the management message MM comprises a predefined value (for instance "NULL"), since the value of the attribute InterfaceCDElapsed-Time is requested, and therefore it is unknown.

According to the present invention, a first executable instruction is created that, when executed by the module EDA at the network element NE, allows the module EDA to reconstruct the payload fields oi1 and v1. For instance, such a first executable instruction could comprise a first string identifying the attribute InterfaceCDElapsedTime, and a second string identifying the interface. As the payload field v1 has a predefined value (or, in other words, it is a redundant field), according to the present invention, such a first executable instruction could omit any reference to such a redundant field, which can be autonomously reconstructed by the module EDA, after having recognised the received encoded message EMM as a GET-REQUEST message.

Therefore, for instance, such a first executable instruction could be as follows:

"key: pmInterfaceCDElapsedTime, Instance: 2.1, /key",

wherein "key" is the start character and "/key" is the end character of such a first executable instruction.

According to the present invention, such a first executable instruction may be for instance inserted into the field k1 of the encoded payload EP. The Applicant has performed some tests wherein the field k1 has a 4 byte size.

Therefore, according to the present invention, for each further attribute whose value is requested by the server EMS (and whose registration number and value are inserted in respective payload fields oi2, v2, ... oin, vn), a respective further executable instruction could be provided, whose structure is similar to the one described above. Each further executable instruction may be inserted in a respective field k2, k3, ..., kn of the encoded payload EP.

Preferably, the encoded payload EP begins with a start instruction, which is comprised into the field k0, and which indicates the management message type (in this case, GET-REQUEST). For instance, such a start instruction could be:

"key: GET-REQUEST".

Preferably, the encoded payload EP ends with an end instruction, which is comprised into the field kn+1. For instance, such fields k0 and kn+1 could have a size of 2 bytes each.

Therefore, according to this first embodiment, the module EDM and the module EDA are provided with a common dictionary, allowing the module EDM to map the registration numbers of the different objects received by manager M into suitable strings to insert in the above described executable instructions. Such a common dictionary also allows the module EDA to replace the strings comprised into the executable instructions with the corresponding registration numbers, before forwarding them to the agent A.

In case of network elements supporting a plurality of protocols, the modules EDM and EDA are provided with a different common dictionary for each management protocol they support.

Therefore, according to the present invention, it is possible to considerably reduce the amount of management information exchanged between manager and agent, the encoded massage size according to the present invention being much smaller than the message size according to the prior art.

For instance, by referring to the above cited GET-REQUEST management message MM referring to nine attributes of an interface, the overall size of the encoded management message EMM according to the embodiment of Figure 2 is the sum of the encoded header size and the encoded payload size, i.e.:

$$(1+1+1+4)+(2+(9\text{x}4)+2) = 7+ 40 = 47 \text{ bytes.}$$

By comparing this size with the size of a SNMP GET-REQUEST management message (234 bytes), it can be noticed that, according to the present invention, the amount of information exchanged between manager and agent has been advantageously reduced by a percentage of about 80%.

The above considerations also apply to management messages transmitted from the agent A to the manager M. In this case, encoding of the management message MM is performed by the module EDA at the network element NE, while decoding of the encoded management message EMM is performed by the module EDM at the server EMS, as it will be explained in further detail herein after.

For instance, it is assumed that the network element NE has to provide the server EMS with the values of a plurality of attributes of a given instance.

Again, it is assumed that the manager M and the agent A support the SNMP management protocol. According to the SNMP protocol, such an operation is performed by sending a so-called GET-RESPONSE message from the agent A to the manager M.

Of course, SNMP is a non limiting example, and the following description could also apply to any other management protocol.

In this case, the structure of a GET-RESPONSE message is similar to the structure of the GET-REQUEST message MM shown in Figure 2, except the fact that the payload fields v1, v2, ..., vn of the GET-RESPONSE management message comprise the actual values of the requested attributes read by the agent A from the local database DB. According to the SNMP management protocol, such fields v1, v2, ..., vn still have a predefined size of 2 bytes each. Therefore, if the GET-RESPONSE management messages relates to nine attributes of a given instance, the overall size of the management message MM is still 234 bytes.

In this case, according to the present invention, the module EDA at the network element NE, before transmitting the GET-RESPONSE management message, encodes it into an encoded management message EMM.

As to the encoded header EH, its structure is identical to the one of the encoded header EH shown in Figure 2. Therefore, a detailed description will not be repeated.

As to the encoded payload EP, as already described above, the present invention provides for creating a sequence of executable instructions, each instruction being included into a respective payload field of the encoded management message EMM. Each instruction is adapted, when executed by the module EDM at the server EMS, to recover both the content of the payload fields oi1, oi2, ..., oin, and the content of the payload fields v1, v2, ..., vn.

Therefore, assuming that the payload field oi1 comprises the registration number of the attribute InterfaceCDElapsedTime (i.e. for instance 1.3.6.1.4.1.637.54.1.2.4.1.1.1.3.2.1) and the payload field comprises the value of such an attribute (for instance, 0), such pair of fields may be encoded in the following executable instruction:

"key: pmInterfaceCDElapsedTime, Instance:2.1, Value: 0, /key",

wherein "key" is the start character and "/key" is the end character of such a first executable instruction. Therefore, in this case, the first executable instruction also comprises a third string "Value=0" identifying the value.

The Applicant has performed some tests wherein the payload field of the encoded message EMM including such a first executable instruction has a size of 5 bytes. Similar executable instructions may be provided for recovering the other payload fields oi2, v2, ..., oin, vn.

Therefore, by referring to the above cited example of a management message MM GET-RESPONSE relative to nine attributes of a given interface, the overall size of the encoded management message is the sum of the encoded header size and the encoded payload size, i.e. $(1+1+1+4)+(2+(9\text{x}5)+2) = 7+ 49 = 56$ bytes. By comparing this size with the size of a GET-RESPONSE SNMP management message (234 bytes), it can be noticed that, according to the present invention, the amount of information exchanged between manager and agent has been advantageously reduced by a percentage of about 75%.

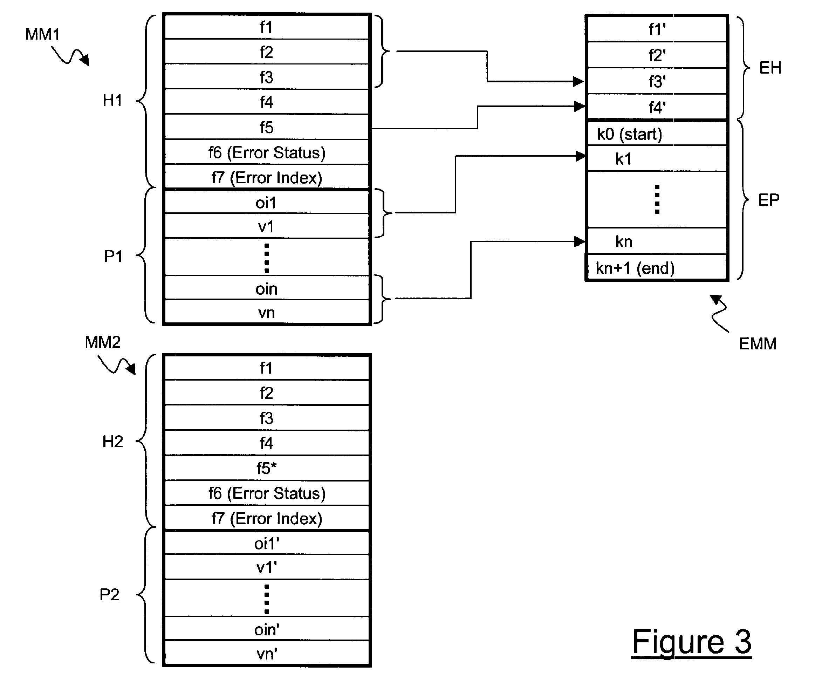

Herein after, by referring to Figure 3, a second example of encoding management messages MM according to the present invention will be described.

In this example, it is assumed that the server EMS requests to the network element NE to force a given set of attributes of a given instance, which are stored in the local database DB of the network element NE, to a set of respective values. Generally speaking, performing such a "main" operation requires at least an auxiliary operation.

Again, it is assumed that the manager M and the agent A support the SNMP management protocol. According to the SNMP, such a request is performed by sending a set of SET-REQUEST messages to the agent A. In particular, the manager sends a first SET-REQUEST message associate to the main operation, and further SET-REQUEST messages associated to auxiliary operations.

Of course, SNMP is a non limiting example, and the following description could also apply to any other management protocol.

By referring to Figure 3, two management messages MM1, MM2 are shown, the first message MM1 being associated to the main operation, and the second message MM2 being associate to an auxiliary operation.

More particularly, each management message MM1, MM2 comprises a respective header H1, H2 and a respective payload P1, P2. The headers H1, H2 have a structure which is substantially identical to the structure of the header H of Figure 2. Therefore, a detailed description will not be repeated.

The payload P1 comprises a plurality of payload fields oi1, v1, oi2, v2, ..., oin, vn. The payload fields oi1, ..., oin comprise object identifiers (i.e. registration numbers) of the attributes whose value is to be changed, while the payload fields v1, ..., vn comprise the values to be written into the local database DB for such objects identified by the payload fields oi1, ..., oin.

The payload P2 of the message MM2 comprises also a plurality of payload fields oi1', v1', oi2', v2', ..., oin', vn', which comprise object identifiers and values allowing the agent A to modify the values of the attributes according to the information comprised into the payload P1 of the management message MM1.

For instance, in case the SET-REQUEST message MM1 is adapted to request modification of three attributes of an interface, and in case such a modification requires that the agent A knows a value of a fourth attribute, the overall size of the message MM1 is (3+3+8+3+4+3+3) + (3x(21+2)) = 96 bytes, while the overall size of the message MM2 is (3+3+8+3+4+3+3) + (21+2) = 50 bytes. Therefore, the overall amount of bytes exchanged between manager M and agent A is 96 + 50 = 146 bytes.

Figure 3 also shows an encoded management message EMM as issued by the module EDM after coding the above management messages MM1, MM2, according to a second embodiment of the present invention.

The encoded management message EMM comprises an encoded header EH and an encoded payload EP.

The structure of the encoded header EH is similar to the structure of the encoded header H shown in Figure 2. Therefore, a detailed description of the encoded header will not be repeated. It is only recalled that the Applicant has performed some tests wherein the field f1' has a 1 byte size, the field f2 has a 1 byte size, the field f3 has a 3 byte size, and the field f4' has a 4 byte size.

In such a case, the Applicant has noticed that the second message MM2 comprises standard information, i.e. redundant information.

Therefore, according to this second embodiment of the present invention, the two messages MM1 and MM2 are merged in a single encoded management message EMM, wherein redundant information are omitted and wherein executable instructions are inserted for reconstructing such redundant information upon decoding at the network element side.

Therefore, as already mentioned, the encoded management message EMM comprises a sequence of executable instructions, each instruction being inserted in a respective payload field k0, k1..., kn+1 of the encoded management message. Each payload field comprises an executable instruction for recovering the content of at least a payload field of the original management messages MM1, MM2.

Upon reception, the module EDA, by executing such executable instructions, is capable of autonomously reconstructing both messages MM1 and MM2, and to suitably insert in their payloads (and in particular, into the payload P2) redundant information.

By way of example, it is assumed that the first attribute whose value has to be modified into the local database DB is InterfaceCDMaxSuppressedIntervals of a given interface. Therefore, the field oi1 comprises the registration number of such an attribute, which may be for instance:

1.3.6.1.4.1.637.54.1.2.4.1.1.1.5.2.1,

wherein the last two digits (2.1) identify the instance to the given interface. Besides, the field v1 comprises the value to be assigned to such an attribute, for instance 0.

According to the present invention, a first executable instruction is created that, when executed by the module EDA at the network element NE, allows the module EDA to reconstruct the fields oi1 and v1. For instance, such a first executable instruction could comprise a first string identifying the attribute InterfaceCDMaxSuppressedIntervals, a second string identifying the interface and a third string identifying that value to be assigned to the attribute.

Therefore, such a first executable instruction could be as follows:

"key: pmInterfaceCDMaxSuppressedIntervals, Instance: 2.1, value: 0, /key",

wherein "key" is the start character and "/key" is the end character of such a first executable instruction. Preferably, such an executable instruction may be inserted into the field k1. The Applicant has performed some tests, wherein the field k1 has a size of 5 bytes.

Therefore, according to the present invention, for each attribute the EMS server wishes to modify, a similar executable instruction may be created and inserted into a respective payload field k2, ..., kn of the encoded management message EMM:

Preferably, the encoded payload EP begins with a start instruction, which is comprised into the field k0, and which indicates the management message type (in this case, CREATE-CD). For instance, such a start instruction could be:

"key: GET-REQUEST".

Further, the encoded payload EP ends with an end instruction, which is comprised into the field kn+1. For instance, such fields k0 and kn+1 could have a size of 1 byte each.

Therefore, according to this second embodiment, the module EDM and the module EDA are provided with a common dictionary. In case of network elements supporting a plurality of protocols, the modules EDM and EDA are provided with a different common dictionary for each management protocol they support. Further, according to this second embodiment, both the module EDM and the module EDA are capable of recovering both the management message associated to the main operation and possible management messages associated to auxiliary operations, by autonomously retrieving in such a common dictionary redundant information, which are omitted into the received encoded message, and by properly inserting it into the decoded management message MM.

Therefore, by referring to the above cited management message MM SET-REQUEST referring to three attributes of an interface, the overall size of the encoded management message EMM according to the embodiment of Figure 3 is the sum of the encoded header size and the encoded payload size, i.e.:

$$(1+1+1+4)+(1+(9 \times 3)+1) = 7 + 29 = 36 \text{ bytes.}$$

By comparing this size with the size of overall amount of bytes transmitted through MM1 and MM2 according to the SNMP protocol (146 bytes), it can be noticed that, according to the present invention, the amount of information exchanged between manager and agent has been advantageously reduced by a percentage of about 75%.

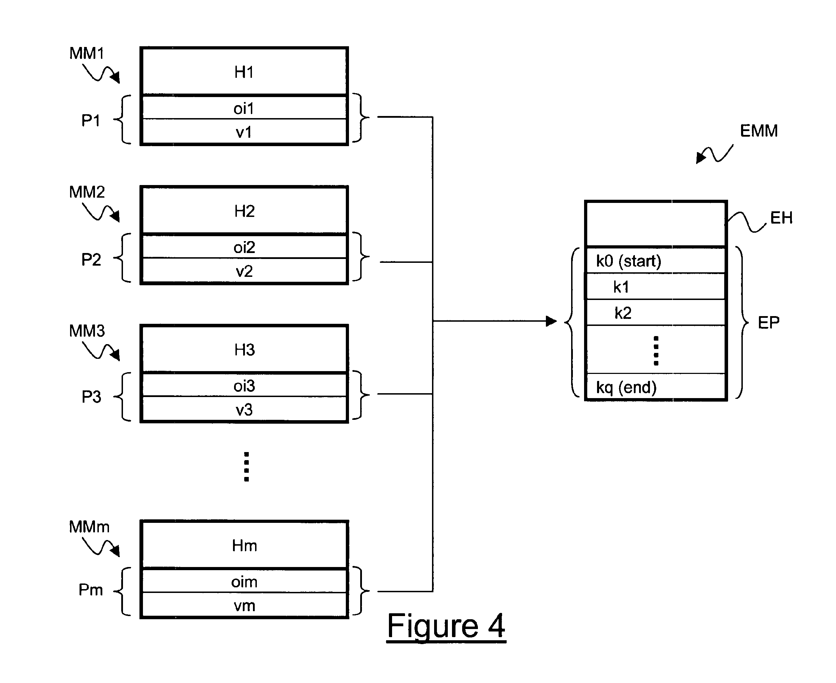

Herein after, by referring to Figure 4, a third example of encoding management messages MM according to the present invention will be described.

In this example, it is assumed that the server EMS requests to the network element NE to perform a same predefined operation upon a given plurality of resources of a same predetermined type. According to the prior art, this operation requires sending a respective plurality of management messages of a same type from the manager M to the agent A.

Figure 4 shows such a plurality of messages MM1, MM2, ..., MMm, wherein m is the number of resources upon which the network element NE has to perform the predefined operation. Each management message has a respective header H1, H2, ..., Hm and a respective payload P1, P2, ... Pm.

The Applicant has observed that the content of such a plurality of messages exhibits high correlation. In particular, the content of the headers H1, H2, ... Hm is substantially the same for all the messages MM1, MM2, ..., MMm. Further, each payload P1, P2, ..., Pm comprises at least a payload field io1, oi2, ..., oim comprising an object identifier, and a field v1, v2, ..., vm comprising a value of such an object. The Applicant has noticed that the registration numbers comprised into the payload fields oi1, oi2, ..., oim are correlated the one to the others. More particularly, such registration number only differ by their last two digits, identifying the particular resource. Therefore, the Applicant has noticed that in this case, the method according to the present invention is particularly advantageous, since the plurality of m management messages MM1, MM2, ..., MMm may be merged in a single encoded management message EMM, whose payload comprises executable instructions. Such executable instructions, when executed by the module EDA upon reception at the network element side, advantageously allow to recover the original plurality of management messages MM1, MM2, ..., MMm, which can then be forwarded to the agent A for further processing.

More in particular, such a sequence of executable instructions could have a particularly reduced size, since it could comprise at least an indexed loop, such as WHILE loops, FOR loops of the like. Such an indexed loop, when repeated for different values of an index, allows to recover the information of each message MM1, MM2, ..., MMm.

Figure 4 shows this solution. The encoded management message EMM comprises an encoded header EH, whose structure is similar to the one shown in Figure 2. Therefore, a detailed description will be omitted.

Further, the encoded management message comprises an encoded payload EP, in turn comprising a plurality of payload fields k0, k1, .., kq, each payload field comprising a single executable instruction of an indexed loop.

For instance, it is assumed that the server EMS wishes to configure sixteen Ethernet ports. In particular, the server EMS wishes to create a current data, in case of Ethernet interfaces, by suitably setting a predefined value for the attributes InterfaceCDMaxSuppressedInterval, InterfaceCDThresholdDataInstance and InterfaceCDAsapIndex.

According to the prior art, such an operation would require sixteen different management messages MM1, MM2, .., MM16, each management message allowing the agent A to perform the above operation. In particular, for the first Ethernet port the following operation should be performed:

```
IF ifType.1="Ethernet" THEN
CREATE-CD (pmInterfaceCDMaxSuppressedInterval.1.1=0,
pmInterfaceCDThresholdDataInstance.1.1=13,
pmInterfaceCDAsapIndex.1.1=3)
```

Similarly, for the second Ethernet port the following operation should be performed:

```
IF ifType.2="Ethernet" THEN
CREATE-CD (pmInterfaceCDMaxSuppressedInterval.2.1=0,
pmInterfaceCDThresholdDataInstance.2.1=13,
pmInterfaceCDAsapIndex.2.1=3)
```

And so on, until the 16th Ethernet port configuration:

```
iF if Type. 16="Ethernet" THEN
CREATE-CD (pmInterfaceCDMaxSuppressedInterval.16.1=0,
pmInterfaceCDThresholdDataInstance.16.1=13,
pmInterfaceCDAsapIndex.16.1=3).
```

Each management message, under the assumption that manager and agent support the SNMP protocol, is a SET-REQUEST message, each message having a size of 280 bytes. Therefore, performing such an operation requires 16 x 280 = 2880 bytes.

As mentioned above, the Applicant has noticed that the above operations are highly correlated, and thus that they can be advantageously expressed by the following sequence of executable instructions:

```
FOR I=1 TO 16 DO
IF ifType.$I="Ethernet" THEN
CREATE-CD (pmInterfaceCDMaxSuppressedInterval.$1.1=0,
pmInterfaceCDThresholdDataInstance.$1.1=13,
pmInterfaceCDAsapIndex.$1.1 =3)
```

Each executable instruction may be written in at least one payload field k0, k1, ...kq.of the encoded management message EMM. The Applicant has performed an experiment wherein fields simply comprising logic operator (IF, FOR, THEN, etc) have a 1 byte size, while fields comprising operator variables (i.e. object identifiers or values) have a 5 byte size. Therefore, it is obtained an encoded management message EMM with a size of 42 bytes.

By comparing this size with the size of overall amount of bytes transmitted through MM1, MM2, ..., MM16 according to the SNMP protocol (2880 bytes), it can be noticed that, according to the present invention, the amount of information exchanged between manager and agent has been advantageously reduced by a percentage of about 99%.

Therefore, advantageously, the present Invention allows to considerably reduce the amount of management information exchanged between manager and agent for performing management tasks, thus allowing to reduce the bandwidth required for transmitting such information and therefore the time required for transmitting such information.

It can be noticed that, although the present invention has been detailed by referring to communication between manager and agent at the EMS layer, the invention may be advantageously applied to communication between manager and agent at any layer of the TMN hierarchy (Q3, TL1 or the like).

## Claims

1. A method of transmitting management information in a telecommunication network (N) from a first network apparatus (EMS, NE) to a second network apparatus (NE, EMS) of said telecommunication network (N), the method comprising:

   - generating (EDM, EDA), at said first network apparatus (EMS, NE), an encoded management message (EMM) comprising at least one executable instruction (k1, k2, ...kn), wherein said at least one executable instruction results in said management information when executed;

- transmitting said encoded management message (EMM) from said first network apparatus (EMS, NE) to said second network apparatus (NE, EMS);
- recovering said management information, at said second network apparatus (NE, EMS), by executing said at least one executable instruction comprised in said encoded management message (EMM).

2. The method according to claim 1, wherein generating comprises providing said encoded management message whose payload comprises a sequence of executable instructions that, when executed, allow to reconstruct a content of payload fields of a management message containing said management information.

3. The method according to claim 1 or 2, wherein said management information comprises at least one object identifier (oi1, oi2, ..., oin), and wherein said at least one executable instruction comprises a first string that, when executed upon reception, allows to recover said at least one object identifier (oi1, oi2, ..., oin).

4. The method according to any of claims 1 to 3, wherein said management information comprises at least one value (v1, v2, ..., vn), and wherein said at least one executable instruction comprises a second string that, when executed upon reception, allows to recover said at least one value (v1, v2, ..., vn).

5. The method according to any of preceding claims, wherein said management information is comprised into at least a management message payload (P; P1, P2; P1, P2, ...Pm).

6. The method according to any of preceding claims, wherein said at least one executable instruction comprises at least an indexed loop.

7. The method according to any of preceding claims, wherein said first and second network apparatus comprise at least a common dictionary.

8. A network apparatus (NE, EMS) of a telecommunication network (N) which is adapted to transmit management information to a further network apparatus (NE, EMS) of said telecommunication network (N), wherein said network apparatus (NE, EMS) comprises:

- an encoder module (EDA, EDM) for generating an encoded management message (EMM), wherein the encoded management message (EMM) comprises at least one executable instruction, wherein said at least one executable instruction results in said management information when executed;
- a transmitter for transmitting said encoded management message (EMM) to said further network apparatus (NE, EMS).

9. The apparatus of claim 8, wherein said encoder module provides an encoded management message whose payload comprises a sequence of executable instructions that, when executed, allow to reconstruct a content of payload fields of a management message containing said management information.

10. The apparatus of claim 8 or 9, wherein said management information comprises at least an object identifier (oi1, oi2, ..., oin), and wherein said at least one executable instruction comprises a first string that, when executed upon reception, allows to recover said object identifier (oi1, oi2, ..., oin).

11. The apparatus of any of claims 8 to 10, wherein said management information comprises at least a value (v1, v2, ..., vn), and wherein said at least one executable instruction comprises a second string that, when executed upon reception, allows to recover said at least a value (v1, v2, ..., vn).

12. The apparatus of any of claims 8 to 11, wherein said management information is comprised into at least a management message payload (P; P1, P2; P1, P2, ...Pm).

13. The apparatus of any of claims 8 to 12, wherein said at least one executable instruction comprises at least an indexed loop.

14. The apparatus of any of claims 8 to 13, wherein it comprises at least a common dictionary.

15. A network apparatus (NE, EMS) of a telecommunication network (N) which is adapted to receive management information from a further network apparatus (EMS, NE) of said telecommunication network (N), wherein said network apparatus (NE, EMS) comprises:

- a receiver for receiving an encoded management message (EMM) from said further network apparatus (NE, EMS), wherein said encoded management message (EMM) comprises at least one executable instruction, wherein said at least one executable instruction results in said management information when executed;
- a decoder module (EDA, EDM) for recovering said management information by executing said at least one executable instruction comprised in said encoded management message.

16. A telecommunication network comprising a network apparatus (NE, EMS) according to any of claims 8 to 14 and at least a further network apparatus according to claim 15.

**Figure 1b**

**Figure 1a**

Figure 2

Figure 3

EP 1 841 133 A1

Figure 4

**European Patent Office**

**EUROPEAN SEARCH REPORT**

Application Number

EP 06 29 0546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHWARTZ B ET AL: "SMART PACKETS: APPLYING ACTIVE NETWORKS TO NETWORK MANAGEMENT" ACM TRANSACTIONS ON COMPUTER SYSTEMS, ACM, NEW YORK, NY, US, vol. 18, no. 1, February 2000 (2000-02), pages 67-88, XP001086882 ISSN: 0734-2071 * paragraphs [0001] - [0003], [01.1], [03.1], [03.2], [03.3], [04.1], [04.3], [0005], [0007] * ----- | 1-16 | INV. H04L12/24 |
| X | KAZI R ET AL: "MOBILE AGENTS FOR ACTIVE NETWORK MANAGEMENT" MILCOM 1999. IEEE MILITARY COMMUNICATIONS CONFERENCE PROCEEDINGS. ATLANTIC CITY, NJ, OCT. 31 - NOV. 3, 1999, IEEE MILITARY COMMUNICATIONS CONFERENCE, NEW YORK, NY : IEEE, US, vol. VOL 1 OF 2 CONF. 18, 31 October 1999 (1999-10-31), pages 149-153, XP000921929 ISBN: 0-7803-5539-3 * the whole document * ----- | 1-16 | |
| X | WO 00/54460 A (NORTEL NETWORKS LIMITED; LAVIAN, TAL; DUNCAN, ROBERT) 14 September 2000 (2000-09-14) * page 2, line 1 - page 3, line 2; claims; figures 1-3 * ----- | 1-16 | TECHNICAL FIELDS SEARCHED (IPC) H04L |

The present search report has been drawn up for all claims

| Place of search | Date of completion of the search | Examiner |
|---|---|---|
| Munich | 14 July 2006 | Ceccarini, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 29 0546

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2006

| Patent document cited in search report | Publication date | Patent family member(s) | Publication date |
|---|---|---|---|
| WO 0054460 A | 14-09-2000 | NONE | |

For more details about this annex : see Official Journal of the European Patent Office, No. 12/82

EPO FORM P0459